(19) **Europäisches Patentamt**

**European Patent Office**

**Office européen des brevets**

(11) **EP 0 890 893 A1**

## (12) EUROPÄISCHE PATENTANMELDUNG

(43) Veröffentlichungstag:
**13.01.1999  Patentblatt 1999/02**

(21) Anmeldenummer: **97119585.4**

(22) Anmeldetag: **08.11.1997**

(51) Int. Cl.[6]: **G05D 23/19**, H05B 3/54,
H05B 1/02, G08C 17/00,
F23N 5/20

(84) Benannte Vertragsstaaten:
**AT BE CH DE DK ES FI FR GB GR IE IT LI LU MC NL PT SE**

(30) Priorität: **08.07.1997 EP 97111686**

(71) Anmelder:
**Electrowatt Technology Innovation AG
6301 Zug (CH)**

(72) Erfinder:
• **Copley, Jonathan Miles
  6330 Cham (CH)**
• **Fiddian-Green, Andrew
  6330 Cham (CH)**
• **Falk, Urs
  6330 Cham (CH)**

(54)    **Regler für eine Klimaanlage**

(57)    Ein Regler (1) für eine Klimaanlage steuert die Raumtemperatur in wenigstens einem Raum. Jedem Wochentag ist eine Tagesbetriebsart zugeordnet und jeder Tagesbetriebsart sind voreinstellbare, veränderbare Daten zugeordnet. Aufgrund dieser Daten berechnet der Regler (1) laufend die Ein- und Ausschaltzeiten und die Kessel- oder Vorlauftemperatur der Klimaanlage im Voraus. Der Regler (1) oder ein ihm zugeordnetes Raumgerät (2) und/oder eine ihm zugeordnete Fernbedienung enthält Eingabemittel (3; 10, 11), deren Betätigung durch eine Person bedeutet, dass die Person eine höhere oder eine tiefere Raumtemperatur wünscht. Deren Betätigung bewirkt daher, dass der Regler (1) selbsttätig die veränderbaren Daten der am aktuellen Wochentag gültigen Tagesbetriebsart verändert und/oder ergänzt, so dass der Temperaturverlauf im Raum am nächstfolgenden Tag, dem die gleiche Tagesbetriebsart zugeordnet ist, den Wünschen der Person besser angepasst ist.

Als Vorteil ergibt sich eine einfach Optimierung des Betriebs der Klimaanlage ohne dass der Regler programmiert werden muss.

Fig.2

EP 0 890 893 A1

**Beschreibung**

Die Erfindung betrifft einen Regler für eine Klimaanlage der im Oberbegriff des Anspruchs 1 genannten Art.

Ein Regler für eine Heizungsanlage ist bekannt aus dem Datenblatt 2252: "CHRONOGYR®, selbstlernender Raumtemperaturregler, REV22..." der Landis & Staefa vom 9.Okt. 1996. Bei diesem Regler kann der Benutzer zwar den Sollwert für die Raumtemperatur für verschiedene Tage und Zeiten frei programmieren, die Umprogrammierung erscheint vielen Personen jedoch als schwierige Aufgabe, die deshalb als lästig empfunden wird.

Der Erfindung liegt die Aufgabe zugrunde, einen Regler für eine Klimaanlage vorzuschlagen, dessen Bedienung einfacher und benutzerfreundlicher ist.

Die Erfindung ist im Anspruch 1 gekennzeichnet. Weiterbildungen der Erfindung ergeben sich aus den abhängigen Ansprüchen.

Gemäss der Erfindung sind für die Bedienung des Reglers Eingabemittel vorgesehen, mit denen eine Person dem Regler mitteilen kann, dass sie die im Raum herrschende Temperatur als zu kalt oder als zu warm empfindet. Die Eingabemittel sind beispielsweise zwei Tasten, wobei die Betätigung der ersten Taste bedeutet, dass die Temperatur wärmer sein soll, und wobei die Betätigung der zweiten Taste bedeutet, dass die Temperatur kälter sein soll. Der Regler ist eingerichtet, die durch mehrere Betätigungen der Eingabemittel erhaltenen Informationen für die Optimierung der Klimaanlage zu verwenden. Die Optimierung hängt von diversen Faktoren ab, z.B. davon, ob ein Raumfühler und/oder ein Aussentemperaturfühler und/oder ein Präsenzdetektor vorhanden sind. Nachfolgend werden anhand der Zeichnung verschiedene Ausführungsbeispiele näher erläutert.

Es zeigen:

Fig. 1    Tagesbetriebsarten a - e für den Sollwert der Raumtemperatur,
Fig. 2    einen Regler und ein Raumgerät,
Fig. 3    eine Tagesbetriebsart und den wirklichen Temperaturverlauf,
Fig. 4    eine werksseitig eingestellte oder programmierte und eine modifizierte Tagesbetriebsart,
Fig. 5    Datensätze einer Tagesbetriebsart in grafischer Darstellung,
Fig. 6    eine Fernbedienung, und
Fig. 7    ein Raumgerät, bei dem die Tagesbetriebsarten auf einfache Weise an den Lebensstil der Bewohner anpassbar ist.

Die Erfindung wird anhand eines Reglers für eine Heizungsanlage detailliert erläutert. Die Erfindung lässt sich auch bei Kühlanlagen, bei Anlagen zur Regelung der Luftqualität, usw. anwenden. Unter dem allgemeinen Begriff Klimaanlage sind hiermit solche HLK Anlagen zu verstehen. Die ersten drei Beispiele betreffen Lösungen, bei denen kein Präsenzdetektor vorhanden ist.

Beispiel 1

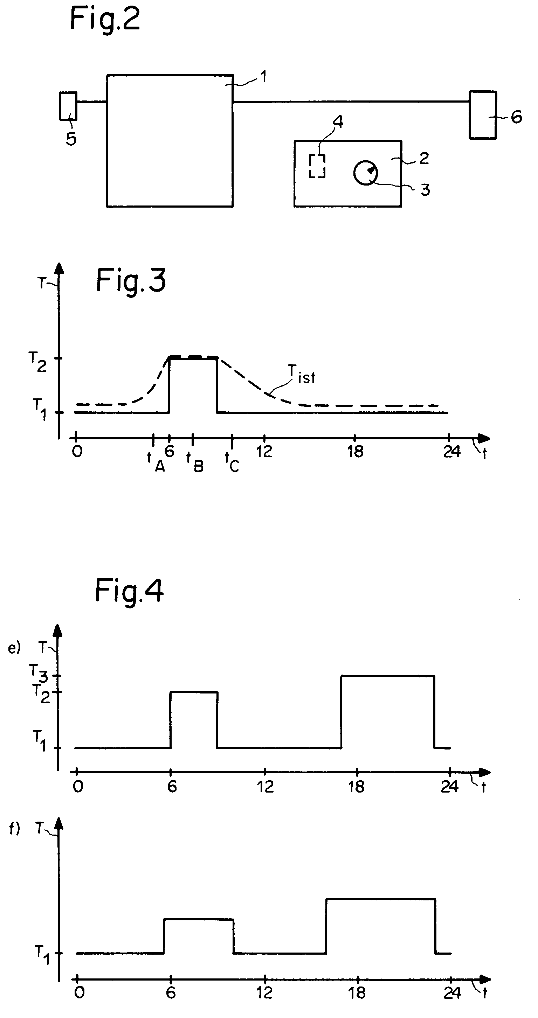

Ein Regler 1 (Fig. 2) für eine Heizungsanlage weist nicht dargestellte Bedienungsmittel auf, damit jedem Wochentag eine Tagesbetriebsart zugeordnet werden kann. Bekannte Tagesbetriebsarten sind "Tagesbetrieb mit einer Heizphase", "Tagesbetrieb mit zwei Heizphasen", "Tagesbetrieb mit drei Heizphasen", "dauernd Normaltemperatur", "dauernd Spar- oder Absenktemperatur" und "Bereitschaft mit Frostschutz". Durch die Tagesbetriebsarten wird der Sollwert der Raumtemperatur in Funktion der Tageszeit über einen Zeitraum von 24 Stunden festgelegt. Die Tagesbetriebsarten sind werksseitig vordefiniert. Die Heizphasen und die Sollwerte der Raumtemperatur sind bei Bedarf, insbesondere bei der erstmaligen Inbetriebnahme des Reglers 1, in bekannter Weise programmierbar und damit an die Bedürfnisse des Benutzers anpassbar. Die Tagesbetriebsarten überdecken in der Regel den Zeitraum von Mitternacht bis Mitternacht, sie können aber auch einen beliebigen anderen Zeitraum, beispielsweise von 0400 Uhr bis 0400 Uhr am folgenden Tag, umspannen, da ein solcher Zeitraum unter Umständen einer Schicht arbeitenden Person besser angepasst ist.

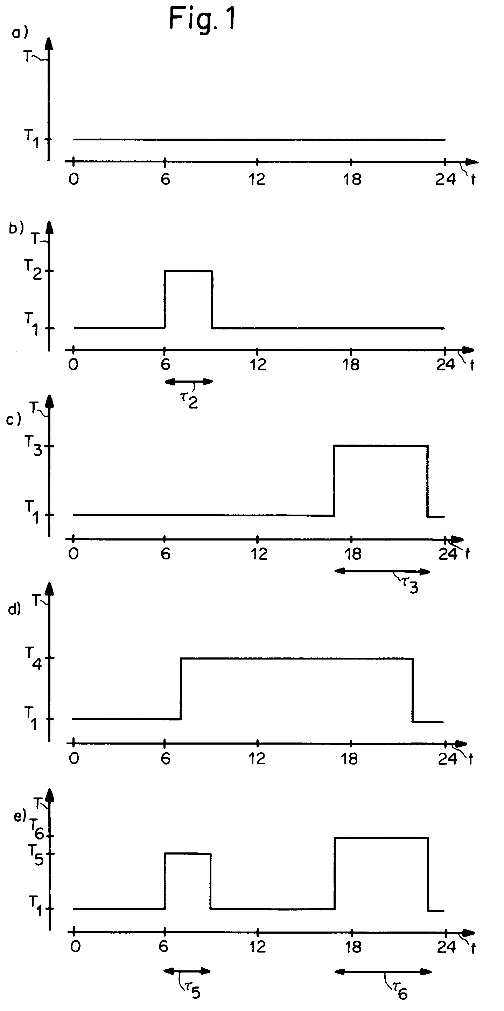

Die Fig. 1 zeigt in grafischer Diagrammdarstellung fünf verschiedene Tagesbetriebsarten a - e für den Sollwert der Raumtemperatur. Die Tagesbetriebsarten erstrecken sich entlang der Abszisse über 24 Stunden. Aufder Ordinate ist der Sollwert T der Raumtemperatur aufgetragen. Gemäss der Tagesbetriebsart a wird der zu beheizende Raum dauernd aufeine relativ niedrige Temperatur $T_1$, die sogenannte Spar- oder Absenktemperatur, geheizt. Die Tagesbetriebsarten b, c und d enthalten eine einzige Heizphase, in der der Raum entweder am Morgen für eine Zeitspanne $\tau_2$ von beispielsweise 6 bis 9 Uhr oder am Abend für eine Zeitspanne $\tau_3$ von beispielsweise 17 bis 23 Uhr oder tagsüber auf eine Komforttemperatur $T_2$ bzw. $T_3$ bzw. $T_4$ aufgewärmt sein soll, während die Raumtemperatur für den Rest des Tages aufdie Absenktemperatur $T_1$ abgesenkt ist. Die Tagesbetriebsart e umfasst zwei Heizphasen, eine am Morgen und eine am Abend.

Jede Tagesbetriebsart ist durch werksseitig voreingestellte, jedoch durch einen Benutzer veränderbare Daten definiert. Gemäss einer ersten, herkömmlichen Lösung enthält eine Tagesbetriebsart Datensätze $D_1$, die eine Tageszeit und einen Sollwert für die Raumtemperatur umfassen. Die Tageszeit gibt dann an, ab welchem Zeitpunkt die zugehörige Solltemperatur gültig sein soll. Die in der Fig. 1 dargestellte Tagesbetriebsart b, die eine einzige Heizphase, die von sechs bis neun Uhr dauert, und eine Absenkphase aufweist, ist somit definiert durch die beiden Datensätze (sechs Uhr, $T_2$) und (neun Uhr, $T_1$). Heizungsanlagen sind bekanntlich träge und können dem Wechsel von Absenk- zu Heizphase nicht sprunghaft folgen. Der Regler 1 berechnet daher die Ein- und Ausschaltzeiten der Heizungsanlage so, dass die Isttemperatur vom Beginn bis zum Ende der Heizphase möglichst gleich der Solltemperatur $T_2$ ist, während in Kauf genommen wird, dass die Solltemperatur $T_1$ in der Absenkphase überschritten wird.

Man kann sagen, dass während der Heizphase, d.h. hier von sechs bis neun Uhr, der erste Datensatz mit der Soll-Temperatur $T_2$, zu den übrigen Tageszeiten der zweite Datensatz mit der Soll-Temperatur $T_1$ der aktuelle Datensatz ist.

Die Berechnung der Ein- und Ausschaltzeiten und der Vorlauf- oder Kesseltemperatur der Heizungsanlage basiert nun einerseits aufden Datensätzen $D_1$ der aktuellen Tagesbetriebsart und andererseits auf einer Fülle von Daten wie aktueller Aussentemperatur, gemischter Aussentemperatur, Ist-Temperatur im Raum sowie Typ der Heizung, z.B. Radiatorenheizung, Fussbodenheizung, und Art der Bauweise des Gebäudes, z.B. leicht, mittel oder schwer. In der Regel sind nicht alle diese Daten bekannt: Es gibt bekanntermassen witterungsgeführte Heizungsanlagen, bei denen die Raumtemperatur nicht gemessen wird, oder es gibt Heizungsanlagen, bei denen die Aussentemperatur nicht erfasst wird, usw.

Die Fig. 2 zeigt ein dem Regler 1 zugeordnetes Raumgerät 2 mit einem Eingabemittel 3 in Gestalt eines Drehknopfes. Das Raumgerät 2 enthält fakultativ einen Temperaturfühler 4 zur Erfassung der im Raum herrschenden Temperatur. Die Drehung des Eingabemittels 3 bewirkt eine Modifikation der aktuellen Tagesbetriebsart, wie das im folgenden anhand eines Beispiels naher erläutert wird.

Es sei Dienstag und dem Dienstag sei anfänglich die werksseitig vordefinierte Tagesbetriebsart b zugeordnet. Gemäss der Tagesbetriebsart b soll also die Raumtemperatur während der Zeitspanne $\tau_2$, die im Beispiel von sechs bis neun Uhr dauert, den Sollwert $T_2$ haben. Damit die Raumtemperatur den Sollwert $T_2$ um sechs Uhr annähernd erreicht, erhöht der Regler 1 zu einem vorausberechneten Zeitpunkt $t_1$ die Kesseltemperatur oder die Vorlauftemperatur des dem Raum zugehörigen Heizkreises.

Der Drehknopf 3 dient nun dazu, den wahrend der Heizphase gültigen Sollwert $T_2$ der für die Dienstage ausgewählten Tagesbetriebsart b den Wünschen der Bewohner anzupassen. Die Dauer der Heizphase, d.h. die Zeitspanne $\tau_2$ der Tagesbetriebsart b, bleibt dabei unverändert. Der Drehknopf 3 ist in Stufen verstellbar. Eine Drehung im Uhrzeigersinn um eine Stufe bedeutet, dass der Bewohner die im Raum herrschende Temperatur $T_{ist}$ als etwas zu kühl empfindet und er daher möchte, dass es leicht wärmer wird. Eine Drehung im Uhrzeigersinn um zwei oder mehr Stufen bedeutet, dass der Bewohner die herrschende Temperatur $T_{ist}$ als kühl empfindet und er daher möchte, dass es entsprechend der Anzahl Stufen um wenig oder bedeutend wärmer wird. Eine Drehung im Gegenuhrzeigersinn bedeutet, dass es zu warm ist und dass es entsprechend der Anzahl Stufen um wenig oder merklich kälter werden soll.

Die Betätigung des Drehknopfes 3 während der Heizphase bewirkt daher erstens eine bleibende Modifikation der Tagesbetriebsart b. Die Modifikation besteht darin, dass die Soll-Temperatur $T_2$ des aktuellen Datensatzes bleibend aufden Wert $T_2 = T_2 + n^*\Delta T_x$ oder $T_2 = T_{ist} + n^*\Delta T_x$ erhöht bzw. erniedrigt wird, wobei der Wert $\Delta T_x$ vorbestimmt ist und beispielsweise 0.2 oder 0.5°C beträgt und wobei der Wert $T_{ist}$ die mittels des Temperaturfühlers 4 erfasste Isttemperatur bezeichnet. Eine erweiterte Möglichkeit besteht darin, dass ein Datensatz $D_1$ nicht nur einen einzigen Sollwert $T_2$, sondern gleich mehrere Sollwerte, z.B. 16 Sollwerte, umfasst und dass die Betätigung des Drehknopfes 3 dazu führt, dass derjeweils älteste Sollwert des aktuellen Datensatzes durch den neuen Sollwert ersetzt wird. Der Regler 1 ist dann eingerichtet, als massgebenden Sollwert $T_2$ den Mittelwert aller Sollwerte des Datensatzes $D_1$ zu verwenden. Mit einer solchen Datenstruktur ist der in Zukunft zu erreichende Sollwert $T_2$ besser an die Bedürfnisse der Bewohner adaptierbar. Als massgebenden Sollwert $T_2$ kann der Regler 1 aber auch einen gewichteten Mittelwert ermitteln, bei dem stark vom Mittelwert abweichende Sollwerte weniger stark gewichtet werden, so dass der Einfluss von "Ausreissern" automatisch geschmälert wird. Bevorzugt benutzt der Regler 1 eine statistische Methode, die dazu führt, dass die Bewohner möglichst wenige Betätigungen des Drehknopfes 3 vornehmen müssen, bis die Tagesbetriebsart b ihren Wünschen entspricht.

Damit die im Raum herrschende Temperatur möglichst schnell den vom Bewohner gewünschten Wert erreicht, bewirkt die Betätigung des Drehknopfes 3 nun zweitens mit Vorteil auch eine sofortige, jedoch nur vorübergehende Änderung des Sollwertes und damit verbunden eine zeitlich begrenzte Modifikation der Kessel- oder Vorlauftemperatur. Falls der Bewohner den Drehknopf 3 betätigt, weil es ihm zu warm ist, dann wird die Heizung z.B. für eine gewisse Zeitdauer abgeschaltet, deren Länge sich nach dem Mass der Temperaturüberhöhung und den thermischen Eigenschaften des Gebäudes richtet. Falls es dem Bewohner zu kalt ist, dann wird die Heizung im Sinne einer Schnellaufheizung vorübergehend forciert.

Für den Mittwoch sei anfänglich die Tagesbetriebsart e vorgesehen, bei der der Raum jeweils am Morgen und am Abend für vordefinierte Zeitspannen $\tau_5$ bzw. $\tau_6$ aufden Sollwert $T_5$ bzw. $T_6$ aufgeheist werden soll. Eine Drehung des Drehknopfes 3 an einem Mittwoch zu einem in der Zeitspanne $\tau_5$ liegenden Zeitpunkt bewirkt eine bleibende Verände-

rung des Sollwertes $T_5$, eine Drehung zu einem in der Zeitspanne $\tau_6$ liegenden Zeitpunkt bewirkt eine bleibende Veränderung des Sollwertes $T_6$.

Es ist möglich, dass die Optimierung der Tagesbetriebsart für jeden Wochentag getrennt erfolgt oder dass die Optimierung beispielsweise für den Montag, den Dienstag, den Donnerstag und den Freitag gemeinsam, für den Mittwoch, den Samstag und den Sonntag einzeln erfolgt. In diesem Fall ist dem Montag, dem Dienstag, dem Donnerstag und dem Freitag die gleiche Tagesbetriebsart zugeordnet.

Anstelle des Drehknopfes können als Eingabemittel 3 auch ein Schieber oder zwei Tasten vorgesehen sein. Einen Tastendruck auf die erste Taste interpretiert der Regler wie eine Drehung des Drehknopfes 3 um eine Stufe im Uhrzeigersinn, einen Tastendruck auf die zweite Taste interpretiert der Regler wie eine Drehung des Drehknopfes 3 um eine Stufe im Gegenuhrzeigersinn.

## Beispiel 2

Es sei wieder Dienstag und das Dienstagprofil sei anfänglich wiederum gleich der Tagesbetriebsart b. Der Drehknopf 3 dient nun dazu, sowohl den Sollwert $T_2$ als auch die Zeitspanne $\tau_2$, während der der Raum auf den Sollwert $T_2$ geheizt sein soll, selbsttätig, d.h. ohne Programmierung, den Wünschen der Bewohner anzupassen. Die Tagesbetriebsarten sind wiederum definiert durch Datensätze des Typs $D_1$. Der Regler 1 braucht nun Kriterien, um entscheiden zu können, ob er den Sollwert $T_2$ oder die Tageszeit des aktuellen oder des nächstfolgenden Datensatzes, d.h. mit anderen Worten die Zeitspanne $\tau_2$, modifizieren soll.

Bei einer ersten Variante sind den Wochentagen Tagesbetriebsarten mit werksseitig relativ kurz eingestellten Heizphasen zugeordnet, da eine Vergrösserung der Heizphasen erfolgt, wenn es dem Bewohner zu kalt ist, während eine Verkleinerung oftmals nicht erfolgt, weil der Bewohner das Haus bereits verlassen hat und nicht mehr eingeben kann, dass die Heizung in den Absenkbetrieb übergehen soll. Die Lösung der Frage, ob der Regler 1 den Sollwert $T_2$ oder den Beginn oder das Ende der Heizphase modifizieren soll, hängt einerseits davon ab, zu welchem Zeitpunkt der Bewohner den Drehknopf 3 betätigte und andererseits von der aktuellen Differenz zwischen dem Sollwert $T_2$ und dem Istwert $T_{ist}$.

Die Fig. 3 zeigt ein Diagramm mit der Tagesbetriebsart b und dem tatsächlichen zeitlichen Verlauf der Raumtemperatur $T_{ist}$. Eingezeichnet sind weiter drei Zeitpunkte $t_A$, $t_B$ und $t_C$, an denen der Bewohner den Drehknopf 3 (Fig. 2) betätigen kann. Die folgende Tabelle stellt eine Möglichkeit dar, wie der Regler 1 diese Eingaben verwertet:

| Zeitpunkt | Besonderheiten | Aktivität des Reglers 1 nach Drehung des Drehknopfes 3 im Uhrzeigersinn | Aktivität des Reglers 1 nach Drehung des Drehknopfes 3 im Gegenuhrzeigersinn |
|---|---|---|---|
| $t_A$ | Zeitpunkt liegt ausserhalb der Zeitspanne $\tau_2$, Raumtemperatur steigend | Vergrösserung der Zeitspanne $\tau_2$ derart, dass die Soll-Temperatur $T_2$ früher erreicht wird. | Verkleinerung der Zeitspanne $\tau 2$ derart, dass die Soll-Temperatur $T_2$ später erreicht wird und/oder Senkung der Soll-Temperatur $T_2$. |
| $t_B$ | Zeitpunkt liegt innerhalb der Zeitspanne $\tau_2$, Soll-Temperatur $T_2$ erreicht | Erhöhung der Soll-Temperatur $T_2$ | Senkung der Soll-Temperatur $T_2$ |
| $t_C$ | Zeitpunkt liegt ausserhalb der Zeitspanne $\tau 2$, Raumtemperatur fallend | Vergrösserung der Zeitspanne $\tau 2$ derart, dass $\tau_2$ die Soll-Temperatur $T_2$ länger beibehalten wird und/oder Erhöhung der Soll-Temperatur $T_2$. | Verkürzung der Zeitspanne derart, dass die Soll-Temperatur $T_2$ weniger lang beibehalten wird. |

In den Fällen, wo eine Änderung der Zeitspanne $\tau_2$ und/oder der Solltemperatur $T_2$ vorgesehen ist, benötigt der Regler 1 ein weiteres Kriterium, um entscheiden zu können, was er tun soll. Als Kriterium bietet sich die Differenz zwischen der Ist- und der Solltemperatur an. Dann muss der Temperaturfühler 4 vorhanden sein. Bei kleiner Differenz ist eher eine Änderung des Sollwertes, bei grosser Differenz eher eine Änderung der Zeitspanne $\tau 2$ in Betracht zu ziehen, wobei die Grenzen nicht scharf gezogen sein müssen, sondern wie bei der Fuzzy Logik fliessend sein können. Im Verlaufe der Zeit werden daher die Zeitspanne $\tau_2$ und der Sollwert $T_2$ von den werksseitigen Vorgaben abweichen und den Wünschen der Bewohner angepasst sein.

Bei einer zweiten Variante ist anfänglich den fünf Werktagen die gleiche Tagesbetriebsart a zugeordnet, so dass der Raum aufdem Niveau der Absenktemperatur und damit relativ kühl ist. Die erste Verstellung des Drehknopfes 3 zum Zeitpunkt $t_2$ bewirkt nun, dass die Tagesbetriebsart a derart geändert wird, dass am nächstfolgenden Werktag die Raumtemperatur zum Zeitpunkt $t_2$ den Sollwert T2 = 20°C erreicht und beispielsweise für eine halbe Stunde behält. Mit anderen Worten gesagt bewirkt die erstmalige Verstellung des Drehknopfes 3 die Erzeugung einer der Tagesbetriebsart b ähnlichen Tagesbetriebsart mit einem vorgegebenen Sollwert $T_2$ = 20°C und einer vorgegebenen Zeitspanne $\tau 2$, die zum Zeitpunkt $t_2$ beginnt und dreissig Minuten dauert. Weitere Verstellungen des Drehknopfes 3 bewirken die Modifikation der den Werktagen zugrunde liegenden Tagesbetriebsart in analoger Weise wie bei der ersten Variante. Da allen Werktagen eine gemeinsame Tagesbetriebsart zugeordnet ist, erfolgt die Adaptierung der Tagesbetriebsaat an die Wünsche der Bewohner schneller, als wenn die Adaptierung für jeden Wochentag getrennt erfolgt. Die Fig. 4 zeigt die nicht modifizerte Tagesbetriebsart e und die aus der Tagesbetriebsart e hervorgegangene, für Werktage gültige Tagesbetriebsart f.

Diese Idee lässt sich dahingehend präzisieren, dass das Raumgerät 2 als passiver Präsenzdetektor dient. Jede Betätigung des Drehknopfes 3 bedeutet nämlich, dass eine Person anwesend ist. Aus den im Verlaufe der Zeit erfolgenden Betätigungen des Drehknopfes 3 kann der Regler 1 somit selbsttätig für jeden Wochentag eine angemessene Tagesbetriebsart erzeugen.

Beispiel 3

Die Beispiele 1 und 2 beruhen technisch auf der Struktur von Datensätzen des Typs $D_1$, bei denen der Verlauf der Solltemperatur als Tagesprofil mit Heiz- und Absenkphasen interpretiert werden kann. Gemäss einer weiteren Lösung ist nun jeder Tagesbetriebsart eine Datenbank zugeordnet, die aus Datensätzen $D_2$ besteht, die ebenfalls eine Tageszeit und einen Sollwert für die Raumtemperatur umfassen. Die Tageszeiten legen hierjedoch nicht fest, ab wann ein neuer Sollwert gelten soll. Sie legen nur fest, dass dann der zugehörige Sollwert gelten soll.

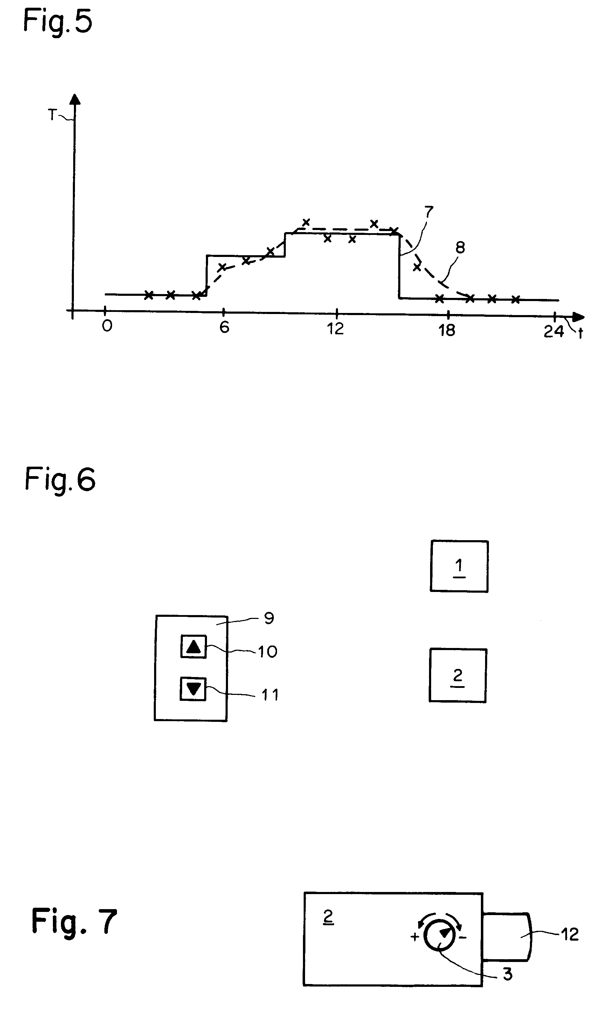

Die Fig. 5 zeigt Datensätze $D_2$ einer Tagesbetriebsart in grafischer Darstellung. Die Abszisse bezeichnet die Tageszeit, die Ordinate die Solltemperatur. Jeder Datensatz $D_2$ ist ein mit einem "x" markierter Punkt. Die ausgezogene Linie 7 markiert ein aus den Datensätzen $D_2$ abgeleitetes Tagesprofil, das durch Datensätze des Typs $D_1$ darstellbar ist und das deshalb vom Regler 1 (Fig. 2) in bekannter Weise in ein Heizprogramm umsetzbar ist. Die gestrichelte Linie 8 markiert ein mittels statistischer Methoden abgeleitetes Tagesprofil, bei dem der Sollwert für die Raumtemperatur keine Unstetigkeiten aufweist.

Der Regler 1 (Fig. 2) ist also eingerichtet, entweder mittels statistischer Methoden aus den der aktuellen Tagesbetriebsart zugrunde liegenden Datensätze $D_2$ ein Tagesprofil mit Heiz- und Absenkphasen zu bestimmen, d.h. eine Transformation von Datensätzen des Typs $D_2$ in Datensätze des Typs $D_1$ vorzunehmen, und die Berechnung der Ein- und Ausschaltzeiten und der Vorlauf- oder Kesseltemperatur der Heizungsanlage analog zu den vorherigen Beispielen durchzuführen. Oder der Regler 1 ist eingerichtet, mittels statistischer Methoden ein Tagesprofil mit einem stetigen Verlauf, wie es die gestrichelte Linie darstellt, zu ermitteln und die Heizungsanlage aufgrund eines derartigen Tagesprofils zu steuern.

Wenn nun der Bewohner den Drehknopf 3 betätigt, dann besteht die Modifikation der aktuellen Tagesbetriebsart darin, dass der Datenbank ein neuer Datensatz mit der aktuellen Tageszeit und dem Sollwert $T_2 = T_2 + n^* \Delta T_x$ oder $T_2 = T_{ist} + n^* \Delta T_x$ hinzugefügt wird, wobei einer Drehung im Uhrzeigersinn ein positiver Wert n, einer Drehung im Gegenuhrzeigersinn ein negativer Wert n zugeordnet ist. Sofern die Zahl der Datensätze, z.B. aus Speichergründen, begrenzt ist, wird z.B. der jeweils älteste Datensatz der aktuellen Tagesbetriebsart durch den neuen Datensatz ersetzt (Fifo Methode: first in, first out).

Die Tagesbetriebsarten a - e (Fig. 1) sind z.B. werksseitig durch Datensätze des Typs $D_2$ voreingestellt. Der Regler 1 kann aber auch eingerichtet sein, dass ein Benutzer oder Installateur eine Tagesbetriebsart mit Heiz- und Absenkphasen in herkömmlicher Weise, z.B. wie bei dem in der Einleitung erwähnten Raumtemperaturregler CHRONOGYR®, eingeben kann, wobei dann der Regler 1 selbsstätig eine Transformation dieses Tagesprofils in Datensätze des Typs $D_2$ vornimmt.

Falls ein Aussentemperaturfühler 5 vorhanden ist, dann umfassen die Datensätze $D_2$ mit Vorteil auch die aktuelle Aussentemperatur. Dies ermöglicht es dem Regler 1, nicht nur den Sollwert $T_{soll}$ selbsttätig den Wünschen des Bewohners anzupassen, sondern auch die Heizkurve automatisch zu adaptieren, so dass der Sollwert $T_{soll}$ während der Heizphase unabhängig von den Witterungsbedingungen möglichst energiesparend und zuverlässig erreicht wird. Die Heizkurve legt bekanntlich den Zusammenhang zwischen der Aussentemperatur und der Kessel- oder Vorlauftemperatur fest.

Die folgenden Beispiele betreffen Lösungen, bei denen auch ein Präsenzdetektor vorhanden ist.

Beispiel 4

Der Regler 1 (Fig. 2) wird mit Daten wenigstens eines Präsenzdetektors 6 gespeist. Die Daten werden beispielsweise nach einer gewissen Aufbereitung in einer Präsenzdatenbank gespeichert. Diese Präsenzdaten dienen dazu, Tagesbetriebsarten zu erzeugen. Dabei entstehen also Absenk- und Heizphasen. Der Regler 1 setzt den Sollwert für eine Heizphase defaultmässig auf beispielsweise 20°C. Wie anhand der Beispiele 1 und 2 beschrieben, adaptiert der Regler 1 selbsttätig bei jeder Betätigung des Drehknopfes 3 den einer Heizphase zugehörigen Sollwert gemäss den Wünschen der Benutzer.

Der Einsatz von Präsenzdetektoren bietet den Vorteil, dass die Länge der Heizphasen permanent vom Regler 1 selbsttätig optimiert wird, auch wenn die Bewohner den Drehknopf 3 nur mehr selten betätigen, weil sie mit der herrschenden Raumtemperatur zufrieden sind.

Als Präsenzdetektoren können handelsübliche Sensoren eingesetzt werden. Als Präsenzdetektor kann aber auch ein der Wohnung oder dem Haus zugeordneter Wasserzähler verwendet werden. Der Wasserzähler erfasst nämlich den gesamten Wasserverbrauch, insbesondere auch jeden Spülvorgang einer Toilette. Der besondere Vorteil liegt darin, dass mit dem Wasserzähler als einzigem Präsenzdetektor die Präsenz in mehreren Räumen wie Küche, WC, Dusche, Bad, usw. erfasst werden kann. Auch wenn sich eine Person in einem Raum ohne Wasseranschluss aufhält, so wird ihre Anwesenheit registriert, sobald sie das WC aufsucht.

Bevorzugt ist der Regler 1 eingerichtet, den Wasserverbrauch mittels statistischer Methoden zu bewerten und bei der Erzeugung der Tagesprofile insbesondere die Tages- oder Nachtzeit zu berücksichtigen, damit ein Gang aufs WC mitten in der Nacht nicht dazu führt, dass unnötigerweise in der Nacht auf Komforttemperatur geheizt wird.

Beispiel 5

Bevorzugt enthält das Raumgerät ein weiteres Bedienungselement 3, beispielsweise eine Taste, wobei der Regler 1 eine Betätigung des Bedienungselementes 3 dahingehend interpretiert, dass die unmittelbar vorhergehende oder unmittelbar folgende Betätigung des Drehknopfes 3 nicht zu einer Modifikation des aktuellen Tagesprofils oder gegebenenfalls der Heizkurve führen soll, sondern dass die Raumtemperatur nur gerade jetzt, also vorübergehend, erhöht oder abgesenkt werden soll.

Bisher bestand die Funktion des Drehknopfes 3 darin, den Wunsch nach einer höheren oder tieferen Temperatur zu erfassen. Der Bewohner kann auch Angaben über die quantitative Änderung eingeben, indem er den Drehknopf 3 um eine unterschiedliche Anzahl von Stufen dreht. Die Funktion des Drehknopfes 3 kann aber auch darin bestehen, Angaben über den absoluten Sollwert der Temperatur zu erfassen. Dazu ist dem Drehknopf 3 eine Skala zugeordnet, die beispielsweise von 5°C bis 25°C oder von 15°C bis 25°C reicht. Der Regler 1 erfasst dann den gewünschten Sollwert immer nach einer Betätigung des Drehknopfes 3 und ordnet den neuen Sollwert der aktuellen Zeitspanne $\tau$ zu. Der am Drehknopf 3 eingestellte Sollwert ist somit nicht ein statisch vorgegebener Wert, der permanent gültig ist, sondern ein dynamisch zu erfassender Wert mit zeitlich begrenzter Wirkung.

Die Fig. 6 zeigt eine Fernbedienung 9 mit zwei Tasten 10 und 11, die beispielsweise über eine Infrarotverbindung mit dem Regler 1 und/oder mit dem Raumgerät 2 kommuniziert. Die Tasten 10 und 11 haben analog zum Drehknopf 3 die Bedeutung, dass es wärmer bzw. kälter werden soll. Die Fernbedienung 9 erlaubt eine besonders komfortable Optimierung der Raumtemperatur.

Die Fig. 7 zeigt ein Raumgerät, bei dem die Tagesbetriebsarten auf einfache Weise an den Lebensstil der Bewohner anpassbar sind. Das Raumgerät 2 weist seitlich einen Schlitz auf, in den eine Karte 12 eingeführt werden kann. Die Karte 12 ist eine Karte aus einem Set von mehreren Karten. Jeder Karte 12 ist ein besonderer Lebensstil der Bewohner zugeordnet. Die Karten 12 enthalten beispielsweise auf der Vorderseite ein Bild und/oder Text zur Kenntlichmachung des Lebensstils, den sie repräsentiert, und auf der Rückseite einen Code, z.B. einen Strichcode, der beim Einführen der Karte 12 in das Raumgerät 2 vom Raumgerät 2 gelesen wird. Den verschiedenen Wochentagen können aufdiese Weise sehr einfach vordefinierte Tagesbetriebsarten zugeordnet werden. Die folgende Tabelle gibt einige wenige Beispiele solcher Zuordnungen:

| Karte Nr. | Geeignet für | Zyklus | Heizphasen | Besonderes |
|---|---|---|---|---|
| 1 | Person oder Paar, das tagsüber ausser Haus ist | 5 + 2 | morgens und abends | Komfort |
| 2 | Familie mit Kindern 5 | 5 + 2 | tagsüber | Komfort |
| 3 | Familie mit Kindern | 5 + 2 | tagsüber | Spar |

(fortgesetzt)

| Karte Nr. | Geeignet für | Zyklus | Heizphasen | Besonderes |
|---|---|---|---|---|
| 4 | Rentner | 7 | tagsüber | Komfort |
| 5 | Rentner | 7 | tagsüber | Spar |
| 6 | kranke Person | 7 | tagsüber | Komfort |
| 7 | Weekendabwesenheit | | | 2 Tage aus |
| 8 | Sommer | | | Heizung aus |

Unter Zyklus = 5 + 2 ist zu verstehen, dass das Heizprogramm fünf aufeinanderfolgende Werktage und zwei aufeinanderfolgende freie Tage umfasst, wobei den Werktagen eine erste Tagesbetriebsart und den beiden freien Tagen eine zweite Tagesbetriebsart zugeordnet ist. Zyklus = 7 bedeutet, dass allen Wochentagen die gleiche Tagesbetriebsart zugeordnet ist. "Komfort" bzw. "Spar"' bedeutet, dass die anfänglichen Solltemperaturen entsprechend eines eher für Bequemlichkeit oder eines eher auf Sparen ausgelegten Klimas ausgelegt sind.

Eine weitere Möglichkeit besteht darin, dass alle Daten inkl. Code sowohl auf der Vorderseite wie auf der Rückseite der Karte 12 vorhanden sind mit dem einzigen Unterschied, dass die Vorderseite für "Komfort", die Rückseite für "Spar" ausgelegt ist.

Mit Vorteil sind die aktuell unbenutzten Karten 12 in einem im Raumgerät integrierten Behälter, z.B. einem Kassettenfach, plazierbar.

**Patentansprüche**

1. Regler (1) für eine Klimaanlage, insbesondere eine Heizungsanlage, eine Kühlanlage oder eine Anlage zur Regelung der Luftqualität, der die Raumtemperatur in wenigstens einem Raum steuert oder regelt, wobei jedem Wochentag eine Tagesbetriebsart zugeordnet werden kann und wobei jeder Tagesbetriebsart voreinstellbare, veränderbare Daten zugeordnet sind, und wobei der Regler (1) laufend aufgrund dieser Daten entsprechend der dem aktuellen Wochentag zugeordneten Tagesbetriebsart und aufgrund weiterer fest vorgegebener Daten und, fakultativ, aufgrund wenigstens einer gemessenen Temperatur die Ein- und Ausschaltzeiten und die Kessel- oder Vorlauftemperatur der Klimaanlage im Voraus berechnet, **dadurch gekennzeichnet, dass** der Regler (1) oder ein ihm zugeordnetes Raumgerät (2) oder eine ihm zugeordnete Fernbedienung (9) Eingabemittel (3; 10,11) enthält, deren Betätigung durch eine Person bedeutet, dass die Person eine höhere oder eine tiefere Raumtemperatur wünscht und dass daher deren Betätigung bewirkt, dass der Regler (1) selbsttätig die veränderbaren Daten der am aktuellen Wochentag gültigen Tagesbetriebsart verändert und/oder ergänzt, so dass der Temperaturverlauf im Raum am nächstfolgenden Tag, dem die gleiche Tagesbetriebsart zugeordnet ist, den Wünschen der Person besser angepasst ist.

2. Regler (1) nach Anspruch 1, **dadurch gekennzeichnet, dass** die den Tagesbetriebsarten zugeordneten Daten in einer Datenbank als Datensätze ($D_2$) gespeichert sind, dass die Datensätze ($D_2$) wenigstens eine Tageszeit und einen Sollwert für die Raumtemperatur umfassen, wobei die Bedeutung des Sollwertes darin liegt, dass zu der zugehörigen Tageszeit die gewünschte Raumtemperatur erreicht sein soll, und dass die Berechnung der Ein- und Ausschaltzeiten und der Kessel- oder Vorlauftemperatur der Klimaanlage aus diesen Daten mittels statistischer Methoden erfolgt.

3. Regler nach Anspruch 1 oder 2, **dadurch gekennzeichnet, dass** er von einem Präsenzdetektor (6) Präsenzdaten über die An- oder Abwesenheit von Personen erhält und dass er die Präsenzdaten und die Betätigungen des Eingabemittels (3; 10,11) zur Erzeugung Von Tagesbetriebsarten benutzt.

4. Regler nach Anspruch 3, **dadurch gekennzeichnet, dass** der Präsenzdetektor (6) ein Wasserzähler ist.

5. Regler nach einem der vorhergehenden Ansprüche 1 bis 4, **dadurch gekennzeichnet, dass** die Zuordnung von vorbestimmten Tagesbetriebsarten zu den Wochentagen mittels codierter Karten (12) erfolgt.

6. Verwendung eines einer Wohnung oder einem Haus zugeordneten Wasserzählers als Präsenzdetektor zur Erfassung der An- oder Abwesenheit von Personen in der Wohnung bzw. dem Haus.

# Fig. 1

# Fig.2

# Fig.3

# Fig.4

## Fig. 5

## Fig. 6

## Fig. 7

**Europäisches Patentamt**

## EUROPÄISCHER RECHERCHENBERICHT

Nummer der Anmeldung

EP 97 11 9585

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | GB 2 224 863 A (HUNTER MELNOR INC) 16.Mai 1990 | 1 | G05D23/19 H05B3/54 |
| A | * Seite 1, Zeile 2-4 * <br> * Seite 4, Zeile 21 - Seite 10, Zeile 22; Ansprüche 1-20; Abbildungen 1-3 * <br> --- | 2-6 | H05B1/02 G08C17/00 F23N5/20 |
| X | FR 2 708 720 A (DENIZOT JEAN PHILIPPE) 10.Februar 1995 | 1 | |
| A | * Seite 1, Zeile 1-3 * <br> * Seite 2, Zeile 25 - Seite 8, Zeile 6; Ansprüche 1-4; Abbildungen 1-4 * <br> --- | 2-6 | |
| X | US 4 557 317 A (HARMON JR KERMIT S) 10.Dezember 1985 Gesammtes Dokument <br> ----- | 1-6 | |

RECHERCHIERTE SACHGEBIETE (Int.Cl.6)

G05D
H05B
G08C
F23N

Der vorliegende Recherchenbericht wurde für alle Patentansprüche erstellt

| Recherchenort | Abschlußdatum der Recherche | Prüfer |
|---|---|---|
| MÜNCHEN | 3.September 1998 | Pierron, P |

EPO FORM 1503 03.82 (P04C03)